# EUROPÄISCHE PATENTSCHRIFT

(11) **EP 1 438 530 B1**
(45) Veröffentlichungstag und Bekanntmachung des Hinweises auf die Patenterteilung: **26.10.2005**
(21) Anmeldenummer: 03787781.8
(22) Anmeldetag: 13.08.2003
(51) Int. Cl.: F16L 37/084

(54) **STECKKUPPLUNG FÜR FLUIDISCHE SYSTEME**
PLUG-IN COUPLING FOR FLUID SYSTEMS
RACCORD EMBROCHABLE POUR SYSTEMES FLUIDIQUES

(30) Priorität: 14.08.2002 DE 20212488 U
(43) Veröffentlichungstag der Anmeldung: 21.07.2004
(73) Patentinhaber: Voss Automotive GmbH, 51688 Wipperfürth (DE)
(72) Erfinder: BRANDT, Josef, 51688 Wipperfürth (DE); KAMINSKI, Volker, 58553 Halver (DE); BILSTEIN, Rozalia, 51688 Wipperfürth (DE)
(74) Vertreter: Zapf, Christoph
(86) Internationale Anmeldenummer: PCT/EP2003/008972
(87) Internationale Veröffentlichungsnummer: WO 2004/016980

(56) Entgegenhaltungen:
- EP-A- 0 360 634
- DE-C- 4 300 037
- GB-A- 2 265 682
- GB-A- 2 319 577

## Beschreibung

Die vorliegende Erfindung betrifft eine Steckkupplung für fluidische Systeme, mit zwei miteinander verbindbaren Kupplungsteilen, die jeweils zur gegenseitigen Verbindung einander zugeordnete Rastmittel aufweisen, wobei eines der Kupplungsteile einen endseitigen Stutzenabschnitt aufweist, mit dem es in das andere Kupplungsteil einsteckbar ist und wobei eines der Kupplungsteile mindestens einen endseitigen, seine Rastmittel tragenden Halteabschnitt aufweist, mit dem es eine äußere Umfangskontur des anderen Kupplungsteiles, an der die zugeordneten komplementären Rastmittel ausgebildet sind, übergreift, wobei zur Trennung der Rastverbindung zwischen den Rastmitteln des ersten Kupplungsteils und den Rastmitteln des zweiten Kupplungsteils im Montagezustand am ersten Kupplungsteil und/oder am zweiten Kupplungsteil ein separates Löseteil gehalten ist.

Eine ähnliche Kupplung ist in der DE 38 43 995 C1 beschrieben, die eine Schnellverbindung zum Verbinden oder Anschließen einer Schlauch- oder Rohrleitung zum Inhalt hat. Die bekannte Verbindungsanordnung weist ein Gehäuseteil (erstes Kupplungsteil) und ein Kernteil (zweites Kupplungsteil) auf, die jeweils einendig mit einem Schlauch, Rohr oder Gerät fest verbunden werden können. Zwischen Kern- und Gehäuseteil ist eine Dichtung angeordnet. In dem Gehäuseteil ist einerseits ein Stutzen zum Eingriff in das Kernteil angeformt, dessen Außendurchmesser geringfügig kleiner ist als der lichte Innendurchmesser des Kemteils. Andererseits ist ein Innendurchmesser eines muffenartigen Abschnitts (Halteabschnitt) des Gehäuseteils größer als der Außendurchmesser des Kemteils. Am freien Ende der Innenwand des muffenartigen Abschnitts des Gehäuseteils sind wenigstens zwei diametral gegenüberliegenden Nocken mit zu dem freien Ende gerichteten Auflaufflächen und diesen gegenüberliegenden Anschlagflächen ausgebildet. Jede Anschlagfläche verläuft senkrecht oder in Form einer Hinterschneidung geneigt zur Längsachse des Gehäuseteils, wobei der lichte Abstand zwischen den Nocken etwa so groß ist wie der Außendurchmesser des Kemteils. Das Gehäuseteil besteht aus einem elastischen Material, wobei die Nocken an einem mit zwei Schenkeln versehenem Ring ausgebildet sind. Die solchermaßen ausgebildeten Nocken stellen Rastmittel zur Verrastung des Gehäuseteils mit dem Kernteil dar. An der Außenseite des Kernteils ist ein Ring mit einer zu seinem freien Ende gerichteten Auflauffläche und mit einer dieser gegenüberliegenden Anschlagfläche, die senkrecht oder in Form einer Hinterschneidung geneigt zur Längsachse des Kernteils verläuft, ausgebildet. Der solchermaßen ausgebildete Ring stellt ein den Nocken komplementäres Rastmittel zur Verrastung des Kemteils mit dem Gehäuseteil dar. Als Vorteil dieser bekannten Schnellverbindung wird unter anderem ausgeführt, daß sie nur aus zwei Teilen mit dazugehörigen Dichtringen bestehe und keine zusätzlichen zusammenzubauenden oder verlierbaren Teile enthalte. Nach Zusammenfügen der Teile der Schnellverbindung ist eine Relativdrehung dieser Teile gegeneinander möglich, was jedoch für bestimmte Anwendungen nicht als vorteilhaft anzusehen ist. Zum Lösen der Verbindung kann zwischen die Schenkel an dem Gehäuseteil und dem Ring an dem Kernteil eine Gabel mit konischen Zinken eingeschoben werden, wodurch die Schenkel radial nach außen gepreßt werden wodurch wiederum die Nocken über den äußeren Durchmesser des Ringes an dem Kernteil angehoben werden, so daß die beiden Kupplungsteile durch Auseinanderziehen voneinander gelöst werden können. Die Notwendigkeit der Verwendung eines solchen Spezialwerkzeugs ist für viele Anwendungsfälle ebenfalls nicht als vorteilhaft anzusehen. In jedem Fall stellt jedoch die unmittelbare Verrastung der beiden im miteinander zu verbindenden Kupplungsteile im Sinne der Gewährleistung einer sicheren und stabilen Verbindung einen Vorteil dar.

Eine ähnliche Schnellverbindung wie die vorbeschriebene ist auch aus dem deutschen Gebrauchsmuster DE 87 11 334 U1 bekannt. Auch diese bekannte Schnellverbindung weist ein Kernteil und ein Gehäuseteil auf, die jeweils einendig mit einem Schlauch, Rohr oder Gerät fest verbindbar sind, wobei zwischen Kem- und Gehäuseteil eine Dichtung angeordnet ist Auch ist an der Außenseite des Kemteils ein Ring mit einer zu dem freien Ende gerichteten Auflauffläche und mit einer dieser gegenüberliegenden Anschlagfläche ausgebildet, wobei der Innendurchmesser des Gehäuseteils größer ist als der Außendurchmesser des Kernteils, am freien Ende der Innenwand des Gehäuseteils sind wenigstens zwei diametral gegenüberliegende Nocken mit zu dem freien Ende gerichtete Auflaufflächen und diesen gegenüberliegenden Anschlagflächen ausgebildet, der lichte Abstand zwischen den Nocken ist etwa so groß ist wie der Außendurchmesser des Kernteils, und das Gehäuseteil besteht aus einem elastischen Material. Im Unterschied zur DE 38 43 995 C1 weist das Gehäuseteil aber keinen inneren Stutzen zum Eingriff in das Kernteil auf. Das Gehäuse kann im Bereich der Nocken ellipsenförmig oder oval ausgebildet sein, wobei die Nocken auf der kleineren Achse der Ellipse angeordnet sind. Damit kann zum Lösen der Verbindung durch ein Zusammendrücken des ellipsenförmigen oder ovalen Gehäuses in Richtung der großen Achse der Ellipse ein Abheben der Nocken aus der Raststellung heraus bewirkt werden. Auch hier wird als Vorteil der Schnellverbindung unter anderem ausgeführt, daß sie nur aus zwei Teilen mit dazugehörigen Dichtringen bestehe, da eine Schnellkupplung mit einem zusätzlichen verlierbaren Verriegelungsteil, wie sie in der DE 31 43 015 A1 beschrieben ist, keine Robotermontage ermögliche. Als Nachteil ist jedoch anzusehen, daß ein äußerer Druck auf das Gehäuse bereits zu einem ungewollten Lösevorgang der miteinander verbundenen Teile führen kann,

Eine ähnliche Steckverbindung wie in der erwähnten DE 31 43 015 A1, d.h. eine technische Lösung mit separatem Halteteil und ohne unmittelbare Verrastung des ersten und zweiten Kupplungsteils, ist auch in der DE 43 00 037 C1 beschrieben. Die aus diesem Dokument bekannte lösbare Steckverbindung dient zur Aufnahme eines rohrförmigen Einsteckteils (erstes Kupplungsteil) mit einer umlaufenden Halterippe. Die Steckverbindung umfaßt hierbei ein zylindrisches Aufnahmegehäuse (zweites Kupplungsteil) mit einem zentralen Aufnahmeraum zum Einführen des Einsteckteils und ein separates Federelement aus hartelastischem Kunststoff, welches mit kreisbogenförmig nach innen gerichteten, elastisch auffederbaren Haltekanten zum Hintergreifen der Halterippe nach dem Eindrücken des Einsteckteils versehen ist. Zur Montage muß das Federelement, bevor das Einsteckteil eingeführt werden kann, zusammengedrückt und durch eine seitliche Öffnung im Aufnahmegehäuse in den Aufnahmeraum eingeführt werden. Nach einem Wiederauffedern des Federelementes im Aufnahmeraum werden dann, insbesondere in der Schließstellung, die Haltekanten über Führungskörper, die in der Außenwand befindliche Aussparungen eintauchen, in axialer Richtung festgelegt. Die Haltekanten besitzen an der Einsteckseite für das Einsteckteil in Einsteckrichtung schräg zusammenführende Auflaufflächen, durch welche sie beim Einführen des Einsteckteils weiter auseinandergedrückt werden. Um die Verbindung zwischen den Haltekanten des Federelementes und der Halterippe des Einsteckteiles wieder aufzuheben, d.h. um die Haltekanten in radialer Richtung leicht von der Halterippe wegdrücken zu können, sind die Haltekanten an ihren Enden über V-förmig zusammengeführte Federstege untereinander verbunden, wobei die Verbindungsstellen jeweils im Bereich einer Öffnung im Aufnahmegehäuse angeordnet und über bogenförmige Druckplatten von außen eindrückbar sind. Eine unmittelbare Verrastung des ersten und zweiten Kupplungsteils findet nicht statt, weil das Federelement die beiden Kupplungsteile verbindet.

Steckkupplungen der gattungsgemäßen Art sind aus den Dokumenten GB-A-2 265 682 und GB-A-2 319 577 bekannt.

Das Dokument GB-A-2 265 682 beschreibt dabei einen Verbinder zum Verbinden von Rohren mit geringem Durchmesser, der einen im allgemeinen zylindrischen Hauptkörper mit einem Verbindungsendabschnitt, einer Kammer geringen Durchmessers, die größer im Durchmesser ist als die Bohrung des Endabschnittes und einer Kammer großen Durchmessers aufweist. Der Endabschnitt und die Kammern sind koaxial miteinander verbunden. Die Kammer großen Durchmessers wird von einer Wand mit einem Paar Fensteröffnungen umgeben, und ein Paar elastische Arme liegen jeweils in einer der Fensteröffnungen, wobei die Arme jeweils eine radial nach innen gebogene Klinke aufweisen, Die Kammer geringen Durchmessers enthält Dichtringe, eine Buchse und eine Hülse, die an der von der Buchse entgegengesetzten Seite der Dichtringe angeordnet sind, die alle um ein mit dem Hauptkörper zu verbindenden Rohr befestigt sind. Die Kammer großen Durchmessers enthält ein zylindrisches Halteelement mit einem inneren Flächenbereich, der sich mit einem Wandabschnitt des Rohres in Eingriff befindet, und eine Außenfläche mit einer Schulter, gegen die die Klinken angelegt sind.

Aus dem Dokument GB-A-2 319 577 ist ein Verbinder für die Verbindung von Rohranordnungen mit kleinem Durchmesser bekannt, der einen Verbindungskörper aufweist, der in solcher Weise ausgebildet ist, daß er sich durch eine Kammer mit kleinem Durchmesser und eine Kammer mit großem Durchmesser erstreckt, welche in einem Schaftkern derart aufgeweitet sind, dass sie mit einem Verbindungsloch einer zylindrischen, in einem vorderen Ende angeordneten Verbindungswand in Verbindung stehen, wobei der Verbindungskörper ein Dichtringelement und ein Hülsenelement innerhalb der Kammer mit kleinem Durchmesser des Verbindungskörpers besitzt, mit einem gekerbten Fenstemutteil, der an einem gegenüberliegenden Teil, der eine Umfangsseite der Kammer mit großem Durchmesser bildet, durchbrochen ist und mit einer zungenähnlichen nachgiebigen Wand, die in dem gekerbten Fenstemutteil in einer nach vorne abstehenden Weise vorgesehen ist und eine Hakenwand mit einem abgebogenen Teil besitzt, die an einem zentralen Teil nach innen geneigt ist und nach innen gezwängt wird, und mit einem abstehenden Teil an einer äußeren Umfangsseite des Körpers nahe dem Vorderende des gekerbten Fensternutteiles, wodurch Druck mit einer ringförmig erweiterten Wand der durch die Hakenwand verbundenen Rohranordnungen aufgenommen wird, und mit einem zylindrischen Freigabeelement, das mit dem abstehenden Teil in Eingriff gelangt, so dass es in Uhrzeiger- und Gegenuhrzeigerrichtung drehbar ist, und das auf der Außenseite der Umfangswand der Kammer mit kleinem Durchmesser vorgesehen ist, wobei das Freigabeelement mit einem Paar von Verriegelungseinrichtungen versehen ist, die eine Nockenwand an einer Oberfläche am rückwärtigen Ende besitzen und die der Einstellung einer konstanten Drehposition zusammen mit der Drehung des Freigabeelementes zu einer Zeit der Verbindung und Freigabe der Rohranordnungen in einer relativ gegenüberliegenden Oberfläche der nachgiebigen Wand oder der äußeren Umfangsfläche des Verbindungskörpers dienen, wodurch die nachgiebige Wand erweitert oder geschlossen wird und der Druck durch den Hakenwandteil aufgenommen oder freigegeben wird.

Während gemäß der GB-A-2 265 682 die Rastmittel durch axialen Druck auf das Löseelement radial aufgespreizt werden, werden die Rastmittel gemäß der GB-A-2 319 577 durch ein Drehen des Löseelementes radial aufgeweitet.

Der vorliegenden Erfindung liegt die Aufgabe zugrunde, eine Steckkupplung für fluidische Systeme der eingangs genannten Art, d.h. insbesondere mit unmittelbarer Verrastung eines ersten und eines zweiten Kupplungsteils, zu schaffen, die sich bei Gewährleistung einer einfachen Montage und hohen Verbindungsstabilität durch eine vereinfachte Demontagemöglichkeit auszeichnet.

Erfindungsgemäß wird dies dadurch erreicht, dass das Löseteil mindestens einen Betätigungsabschnitt und mindestens zwei Öffnungsabschnitte zur jeweiligen Anlage an einer radial nach innen gerichteten Fläche der Haltearme aufweist, wobei der Betätigungsabschnitt und die Öffnungsabschnitte derart ausgeführt sind, dass durch einen radialen Druck auf den Betätigungsabschnitt sowohl die Öffnungsabschnitte als auch über die Öffnungsabschnitte die Haltearme radial aufgespreizt werden.

Das erfindungsgemäß ausgebildete Löseteil stellt vorteilhafterweise ein in die Kupplungsverbindung integrierbares "Einbau-Lösewerkzeug" für die Steckkupplung dar, ohne daß es aber dabei die Funktion eines Verbindungs-, Halte- oder Arretierteiles übernehmen würde. Zur gegenseitigen Verbindung der Kupplungsteile dienen ausschließlich die zueinander komplementären Rastmittel des ersten und des zweiten Kupplungsteils, die eine sichere und stabile Verbindungsausbildung garantieren. Ein Vorteil des separaten Löseteiles besteht dabei auch darin, daß das Material, aus dem es gefertigt ist, auf das Material insbesondere des ersten aber auch des zweiten Kupplungsteils abgestimmt werden kann, wobei eine gezielte und optimierte Einstellung von Lösekräften für die Verbindung zwischen den Rastmitteln möglich ist.

Wenngleich unterschiedliche Ausbildungen des Halteabschnittes möglich sind, beispielsweise in Form eines muffenartigen Zylinders mit längsgeschlitzter Seitenfläche, so stellt aufgrund ihrer Montagefreundlichkeit eine Ausführung, bei welcher der Rastmittel tragende Halteabschnitt des ersten Kupplungsteiles aus zwei einander diametral gegenüberliegenden elastisch rückfedemd aufspreizbaren Haltearmen gebildet ist, ein Vorzugsvariante der Erfindung dar. Durch die Bedienung des Löseteiles werden die Haltearme aufgespreizt und somit die Rastverbindung zwischen dem ersten und zweiten Kupplungsteil aufgehoben. Die Teile können auseinandergezogen werden und danach erfolgt eine selbsttätige Rückstellung der Haltearme. Hierbei können durch eine unterschiedliche Materialwahl für die Haltearme und das Löseteil die Feder- und Lösekräfte (Spreizstellung der Haltearme) optimal angepaßt werden.

Das Löseteil kann aus Kunststoff oder Metall gefertigt werden, wobei es im Sinne einer einfachen Herstellungsweise bei hoher Funktionalität besonders vorteilhaft ist, das Löseteil einstückig, z.B. als Spritzgußteil, herzustellen. Das Löseteil kann mit Vorteil, zumindest abschnittsweise, aus einem elastisch federnden oder einem - im Hinblick auf manuelle Stellkräfte und üblicherweise betriebsbedingt auftretende mechanische Spannungen - starren Material bestehen. Dabei können in dem Löseteil verschiedene Abschnitte, beispielsweise starre und/oder elastische Abschnitt, über Scharniere, wie Filmscharniere, miteinander verbunden sein.

In dem Löseteil, das in seiner Grundgestalt bevorzugt im wesentlichen als Ring ausgebildet sein kann, wobei es dann in der konkreten Ausführung, gegebenenfalls auch abschnittsweise, eine runde, ovale oder vieleckige Form aufweisen kann, sind mindestens ein Betätigungsabschnitt zur manuellen Bedienung, Öffnungsabschnitte, insbesondere zum Aufspreizen der Haltearme, und jeweils zwischen Betätigungs- und Öffnungsabschnitt angeordnete Druckübertragungsabschnitte und vorgesehen. Diese Druckübertragungsabschnitte leiten die über die Betätigungsabschnitte aufgenommene Kraft an die Öffnungsabschnitte weiter. Die Druckübertragungsabschnitte können dabei sowohl an den Betätigungsfeldern, als auch an den Öffnungsabschnitten wahlweise außen oder mittig angreifen. Vorteilhafterweise kann dabei grundsätzlich eine Reduzierung der Betätigungs- und Stellkräfte dadurch erreicht werden, daß an den Enden der Druckübertragungsabschnitte Gelenke, bevorzugt in Form von Filmscharnieren angebracht sind. Dadurch können sich die Druckübertragungsabschnitte besser in Richtung des Kraftflusses ausrichten.

Was die Öffnungsabschnitte betrifft, so können an diesen und am ersten Kupplungsteil, damit sich die Öffnungsabschnitte bei einer Betätigung der Betätigungsabschnitte nur radial nach außen bewegen, entsprechend ausgebildete Mittel zur Führung vorgesehen sein.

Am Löseteil können bevorzugt ein oder zwei Betätigungsabschnitte vorgesehen sein. Ein Löseteil mit einem Betätigungsabschnitt kann sinnvoll an Stellen eingesetzt werden, wo das erste Kupplungsteil bauraumbedingt oder steckerformbedingt nur von einer Seite her zugänglich ist. Gemäß einer speziellen Ausführung der Erfindung kann dabei auch vorgesehen sein, daß das Löseteil einen Betätigungsabschnitt, zwei, jeweils zwischen dem Betätigungsabschnitt und einem Druckübertragungsabschnitt angeordnete Öffnungsabschnitte und optional einen die Öffnungsabschnitte miteinander verbindenden Verbindungsabschnitt umfaßt. Auch eine im wesentlichen gabelförmige Grundgestalt des Löseteiles (ohne Verbindungsabschnitt) ist möglich.

Ein Löseteil mit zwei Betätigungsabschnitten sollte immer dann eingesetzt werden, wenn nicht aus den vorgenannten Gründen ein Teil mit nur einem Betätigungsabschnitt eingesetzt werden muß. Insbesondere zwei einander diametral gegenüberliegende Betätigungsabschnitte haben dabei den Vorteil der Symmetrie, wodurch sich das Löseteil leichter automatisch montieren läßt und sich ein Optimum der Kraftwirkung einstellt.

Das erfindungsgemäß vorgesehene Löseteil zeichnet sich durch eine einfache Montage aus. Es braucht dazu prinzipiell nur in axialer Richtung in einen Zwischenraum zwischen dem Stutzenabschnitt und dem den Rastmittel tragenden Halteabschnitt des ersten Kupplungsteiles eingeschoben werden. Um das Löseteil jedoch noch besser gegen Verlust geschützt an dem ersten Kupplungsteil zu fixieren, können entsprechend ausgebildete Rastmittel an diesen beiden Teilen, dabei insbesondere an den Öffnungsabschnitten und an den Haltearmen, vorgesehen sein.

Nachfolgend wird auch im Detail eine mögliche Variante der Erfindung beschrieben, bei der das Löseteil und das erste Kupplungsteil Rast- und Halteelemente derart aufweist, daß das Löseteil in einer Reihenfolge
1. axiales Einschieben des Löseteiles in das erste Kupplungsteil und/oder Verrasten zur Sicherung gegen eine axiale Rückbewegung und
2. tangentiales Verschieben des Löseteiles im ersten Kupplungsteil und Verrasten zur Sicherung gegen eine entsprechende Rückbewegung montiert wird.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im folgenden die Erfindung näher erläutert werden. Dabei zeigen:
- Fig. 1: in perspektivischer Darstellung ein erstes Kupplungsteil einer erfindungsgemäßen Steckkupplung,
- Fig.2: in perspektivischer Darstellung ein Löseteil einer erfindungsgemäßen Steckkupplung,
- Fig. 3: in einer Fig. 1 entsprechenden Darstellung die erfindungsgemäße Steckkupplung mit Löseteil in einem Vormontagezustand von Löseteil und erstem Kupplungsteil,
- Fig. 4: im axialen Halbschnitt eine gegenüber Fig. 3 vergrößerte Darstellung der erfindungsgemäßen Steckkupplung mit erstem und zweitem Kupplungsteil sowie Löseteil im (End-)Montagezustand,
- Fig. 5: eine Seitenansicht der erfindungsgemäßen Steckkupplung mit Bezug auf Fig. 3,
- Fig. 6: einen Schnitt durch die erfindungsgemäße Steckkupplung entsprechend der Linie VI-VI in Fig. 5,
- Fig. 7 bis Fig. 11: in einer Fig. 2 entsprechenden Darstellung, mehrere Ausführungsformen von Löseteilen einer erfindungsgemäßen Steckkupplung,
- Fig. 12: in perspektivischer teilgeschnittener Darstellung ein erstes Kupplungsteil einer erfindungsgemäßen Steckkupplung in einer weiteren Ausführungsform,
- Fig.13: in perspektivischer teilgeschnittener Darstellung das in Fig. 11 dargestellte Löseteil einer erfindungsgemäßen Steckkupplung,
- Fig.14: in perspektivischer Darstellung das erste Kupplungsteil einer erfindungsgemäßen Steckkupplung gemäß Fig. 12 im Zusammenbau mit dem Löseteil gemäß Fig. 13,
- Fig. 15 und 16: in einer Fig. 2 entsprechenden Darstellung, zwei weitere Ausführungsformen von Löseteilen einer erfindungsgemäßen Steckkupplung,
- Fig. 17 bis Fig. 19: jeweils in Seitenansicht, verschiedene Montageschritte für ein Löseteilen einer erfindungsgemäßen Steckkupplung in einem ersten Kupplungsteil,
- Fig. 20 bis Fig. 22: in verschiedenen Ansichten eine weitere Ausführungsform eines Löseteiles einer erfindungsgemäßen Steckkupplung.

In den verschiedenen Figuren der Zeichnung sind gleiche Teile stets mit den gleichen Bezugszeichen versehen und werden daher im folgenden in der Regel jeweils nur einmal beschrieben.

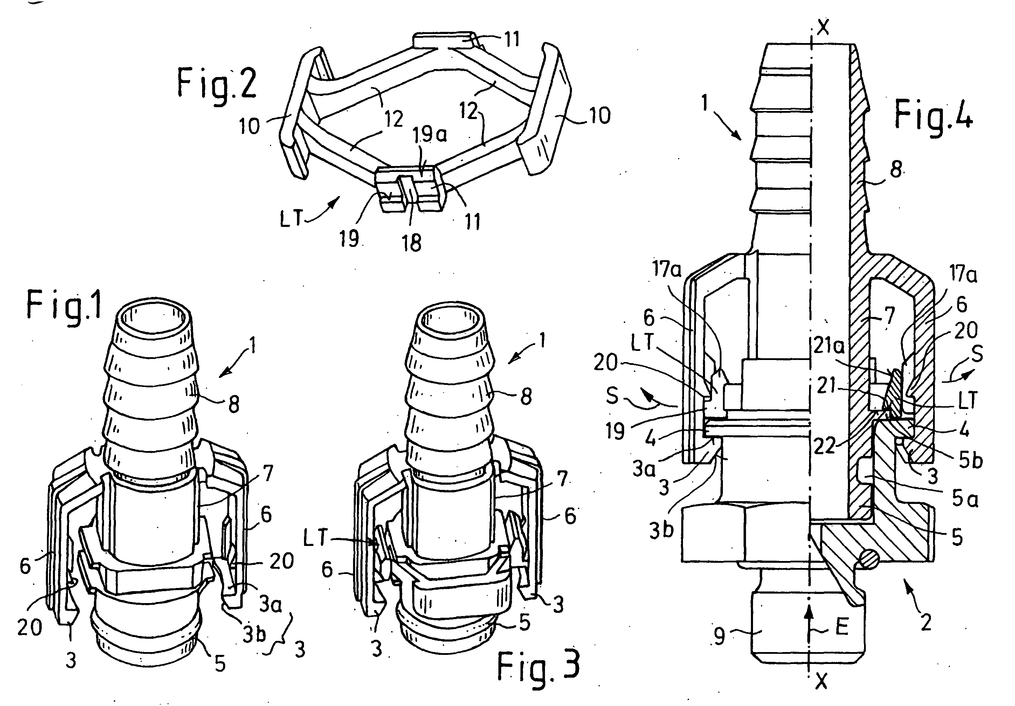

Wie sich zunächst aus Fig. 1 bis 4 ergibt, umfaßt eine erfindungsgemäße Steckkupplung für fluidische Systeme, insbesondere eine Schnell-Steckkupplung, zwei rohrförmige, miteinander verbindbare Kupplungsteile 1, 2, die zur gegenseitigen Verbindung Rastmittel 3, 4 aufweisen.

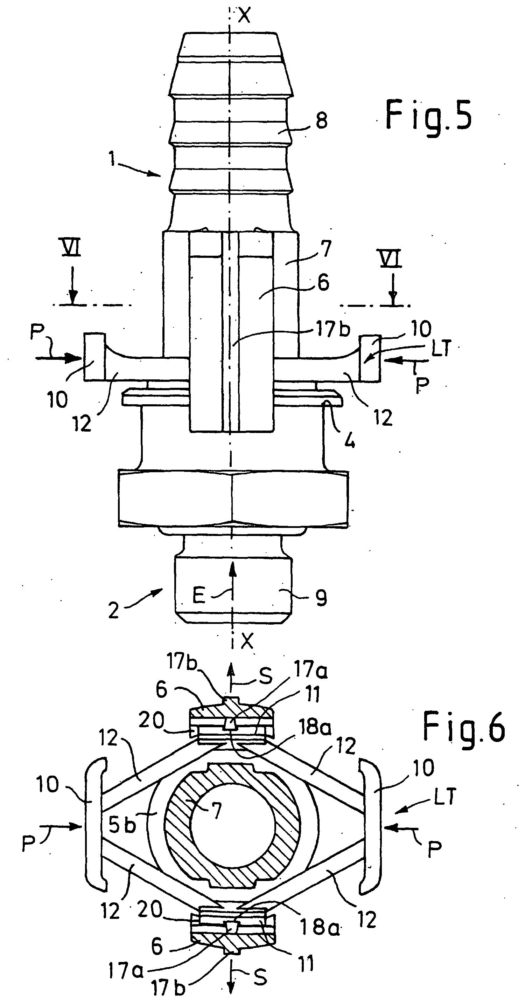

Das erste Kupplungsteil 1 (Einzeldarstellung in Fig. 1) weist einerseits einen endseitigen Stutzenabschnitt 5 auf, mit dem es in das zweite Kupplungsteil 2 einsteckbar ist, wie dies Fig. 4 (sowie ergänzend in zwei weiteren Hauptansichten Fig. 5 und 6) zeigen. Andererseits weist das erste Kupplungsteil 1 mindestens einen endseitigen, seine Rastmittel 3 tragenden Halteabschnitt 6 auf, der in allen nachfolgend beschriebenen Ausführungen durch zwei diametral einander gegenüberliegende Haltearme gebildet ist und mit dem es eine äußere Umfangskontur des zweiten Kupplungsteiles 2, an der den Rastmitteln 3 des ersten Kupplungsteiles 1 komplementäre Rastmittel 4 ausgebildet sind, übergreift.

Die Rastmittel 3 des ersten Kupplungsteiles 1 sind jeweils durch eine Rastkante 3a gebildet, der - in Steckrichtung des zweiten Kupplungsteils 2 (Pfeil E in Fig. 4, 5, 12 und 17) in an sich bekannter Weise eine Anlauffläche 3b vorgeordnet ist (vgl. Fig. 1 und 4). Die komplementären Rastmittel 4 des zweiten Kupplungsteiles 2 sind aus einem, insbesondere endständig angeordneten, ringförmig umlaufenden Flanschabschnitt gebildet (vgl. Fig. 4 und 5). (Das Bezugszeichen 4 wird im folgenden sowohl für "Rastmittel", als auch für "Flanschabschnitt" verwendet, da nachfolgend nur Ausführungen der Rastmittel konkret beschrieben sind, die aus einem Flanschabschnitt gebildet sind.)

Des weiteren umfaßt eine erfindungsgemäße Steckkupplung ein separates Löseteil LT (Einzeldarstellung in Fig. 2), das im Montagezustand (Fig. 4) oder bereits in einem Vormontagezustand (Fig. 3) am ersten Kupplungsteil 1 und/oder am zweiten Kupplungsteil 2 gehalten ist und zur Trennung der Rastverbindung zwischen den Rastmitteln 3 des ersten Kupplungsteils 1 und den Rastmitteln 4 des zweiten Kupplungsteils 2 dient.

Wie bereits erwähnt, kann in bevorzugter Ausführung der die Rastmittel 3 tragende Halteabschnitt 6 des ersten Kupplungsteiles aus zwei einander diametral gegenüberliegenden elastisch rückfedemd aufspreizbaren Haltearmen gebildet sein. (Das Bezugszeichen 6 wird im folgenden sowohl für "Halteabschnitt", als auch für "Haltearme" verwendet, da nachfolgend nur Ausführungen des Halteabschnitts konkret beschrieben sind, die aus Haltearmen gebildet sind.) Die mögliche Spreizbewegung der Haltearme 6 zum Lösen des ersten Kupplungsteiles 1 vom zweiten Kupplungsteil 2 ist durch die mit S bezeichneten Pfeile in Fig. 4 angedeutet.

Die Haltearme 6 sind einstückig an ein Rohrstück 7 des ersten Kupplungsteiles 1 angeformt, an dem einendig ein Leitungsanschluß 8 und anderendig der Stutzenabschnitt 5 ausgebildet sind. Der Leitungsanschluß 8 und der Stutzenabschnitt 5 sind koaxial (Steckachse X-X in Fig. 4), d.h. miteinander fluchtend, angeordnet.

Wie Fig. 4 veranschaulicht, weist der Stutzenabschnitt 5 eine Umfangsnut 5a zur Aufnahme einer Dichtung, wie eines O-Ringes, auf. Außerdem ist Fig. 4 zu entnehmen, daß der Stutzenabschnitt 5 auch einen umfangsgemäß angeordneten, insbesondere mit dem Flanschabschnitt 4 des zweiten Kupplungsteiles 2 zusammenwirkenden Anschlag 5b zur Begrenzung seiner Einstecktiefe in das zweite Kupplungsteil 2 aufweist.

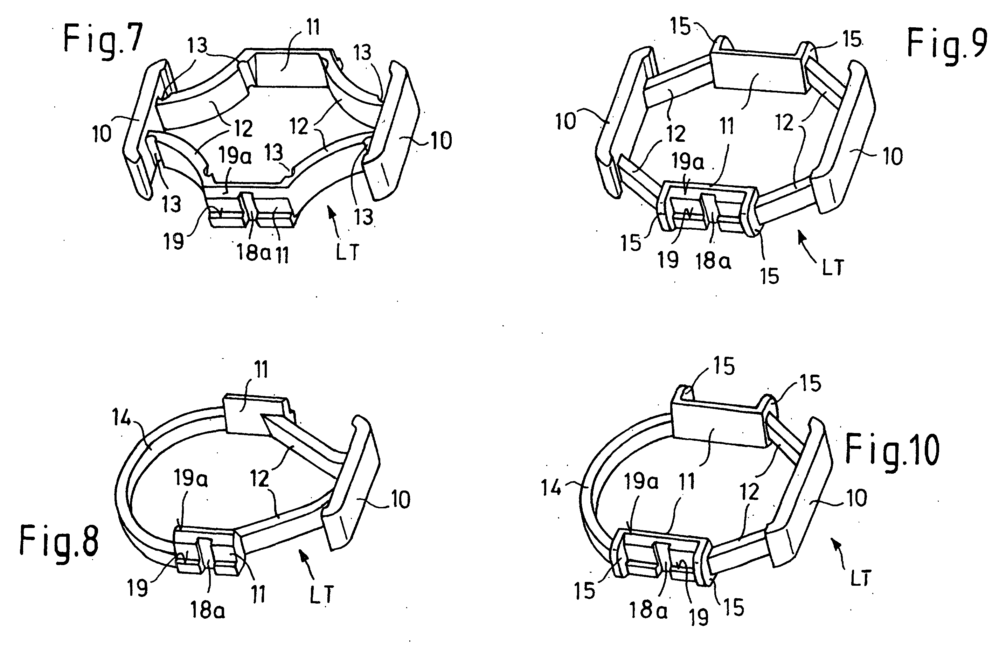

Wie das erste Kupplungsteil 1 weist auch das zweite Kupplungsteil 2 einendig, insbesondere auf seiner dem Flanschabschnitt 4 abgewandten Seite, einen Leitungsanschluß 9 auf (Fig. 4, 9).

Das erfindungsgemäß vorgesehene Löseteil LT läßt sich auf einfache Weise montieren bzw. in dem ersten Kupplungsteil 1 vormontieren. Es wird dazu nur axial in der Steckrichtung des zweiten Kupplungsteils (Pfeil E in Fig. 4, 12) in einen (nicht näher bezeichneten) Zwischenraum zwischen dem Stutzenabschnitt 5 und dem den Rastmittel 3 tragenden Halteabschnitt 6 des ersten Kupplungsteiles 1 eingeschoben. Danach können die beiden Kupplungsteile 1, 2 ineinandergesteckt und miteinander verrastet werden.

Das Löseteil LT weist in allen Ausführungen mindestens einen Betätigungsabschnitt 10 auf. Vorzugsweise verfügt es, wie in Fig. 2 dargestellt, über zwei einander gegenüberliegende, plattenartige, Betätigungsabschnitte 10. Des weiteren zeigt Fig. 2, daß das Löseteil LT mindestens zwei Öffnungsabschnitte 11, vorzugsweise zwei einander gegenüberliegende, insbesondere plattenartige, Öffnungsabschnitte 11 zur Anlage an einer radial nach innen gerichteten Fläche der Haltearme 6 und zum radialen Aufspreizen der Haltearme 6 aufweist. Schließlich ist Fig. 2 zu entnehmen, daß das Löseteil LT mindestens zwei Druckübertragungsabschnitte 12, vorzugsweise vier, insbesondere stabartig ausgebildete, Druckübertragungsabschnitte 12 aufweist, die jeweils mittig an den Betätigungsabschnitten 10 und den Öffnungsabschnitten 11 ansetzen. Jeweils ein Druckübertragungsabschnitt 12 verbindet einen Betätigungsabschnitt 10 mit einem Öffnungsabschnitt 11. Das Löseteil LT ist somit in seiner Grundgestalt im wesentlichen als Ring ausgebildet, wobei diese Ausbildung auch beinhaltet, daß das Löseteil LT, gegebenenfalls auch abschnittsweise, eine runde, ovale oder vieleckige Form aufweisen kann.

Zur Aufhebung des in Fig. 4 bis 6 dargestellten Montagezustandes einer erfindungsgemäßen Steckkupplung erfolgt ein manueller Druck auf die Betätigungsabschnitte 10 im Sinne der Pfeile P in Fig. 5 und 6. Dieser Druck wird über die Druckübertragungsabschnitte 12 auf die Öffnungsabschnitte 11 übertragen. Diese liegen, wie dies insbesondere Fig. 6 deutlich zeigt, an den Haltearmen 6 an und führen unter der Wirkung des Druckes eine Spreizbewegung aus, die auch zu einem Aufspreizen (Pfeile S) der Haltearme 6 führt. Dadurch werden die Rastelemente 3, 4 des ersten Kupplungsteiles 1 und des zweiten Kupplungsteiles 2 außer Eingriff gebracht und die beiden Kupplungsteile 1, 2 können voneinander getrennt werden - beispielsweise durch ein Abziehen des zweiten Kupplungsteiles 2 entgegen der Pfeilrichtung E vom ersten Kupplungsteil 1.

Was das Material des Löseteils LT betrifft, so kann dieses aus Kunststoff oder Metall bestehen. Bevorzugt kann das Löseteil LT - im Sinne einer vorteilhaft selbsttätigen Rückstellung aus der Spreizstellung heraus nach Wegfall der Betätigungskraft - als Ganzes, aber auch abschnittsweise, aus einem elastisch federnden Material bestehen. Ebenso ist es aber auch möglich, daß das Löseteil LT zumindest abschnittsweise aus einem starren Material besteht.

Insbesondere bei der Verwendung unterschiedlicher Materialien in den verschiedenen Abschnitten des Löseteiles LT, aber auch bei materialeinheitlicher Ausbildung kann es notwendig sein bzw. ist es vorteilhaft, wenn in dem Löseteil LT verschiedene Abschnitte, beispielsweise starre und/oder elastische Abschnitte, wie Druckübertragungsabschnitte 12, Betätigungsabschnitt(e) 10 oder Öffnungsabschnitte 11, über Scharniere, wie Filmscharniere, miteinander verbunden sind. Derartige Filmscharniere sind in den Ausführungen des Löseteiles LT gemäß Fig. 7 sowie 15 bis 19 gezeigt und dort jeweils mit dem Bezugszeichen 13 bezeichnet. Die Filmschamiere 13 reduzieren die notwendigerweise aufzubringenden Betätigungskräfte und führen dazu, daß sich die Druckübertragungsabschnitte 12 besser in Richtung des Kraftflusses ausrichten können.

In den Ausführungen gemäß der genannten Figuren weisen die Druckübertragungsabschnitte 12 des Löseteils LT jeweils eine konkave Krümmung auf. Auch dies dient zur Optimierung des Kraftflusses. Die zur Steckachse X-X nach innen gewölbte Druckübertragungsabschnitte 12 führen dazu, daß sich die Kräfte zur Auslenkung (Knickpunkt) der Druckübertragungsabschnitte 12 verringern und daß die Druckübertragungsabschnitte 12 bei ihrer Betätigung am ersten Kupplungsteil 1 unter Abstützung an diesem Teil gut abgleiten.

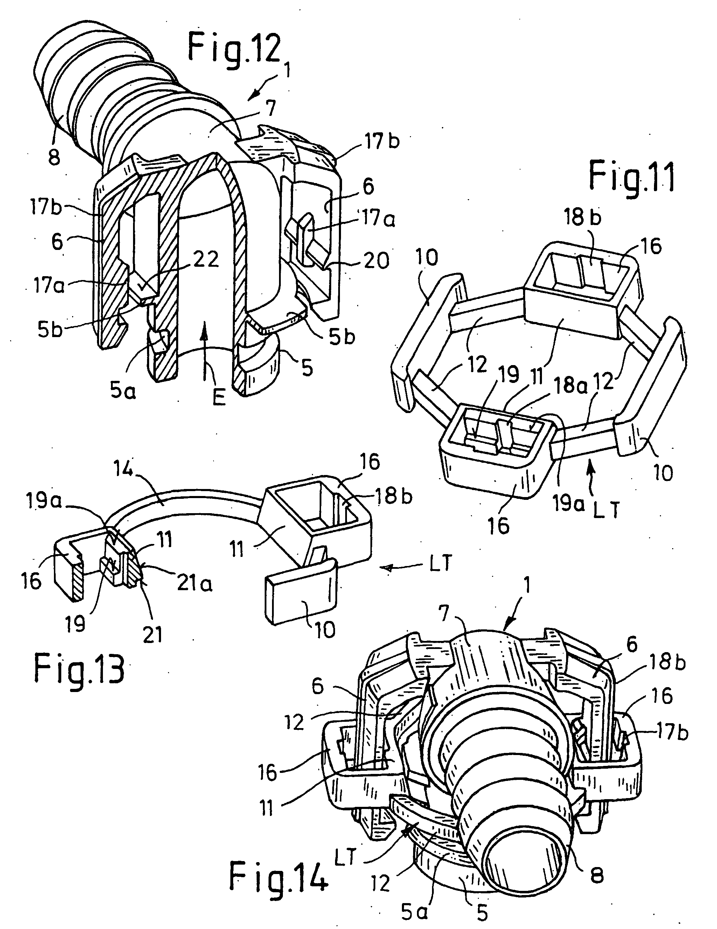

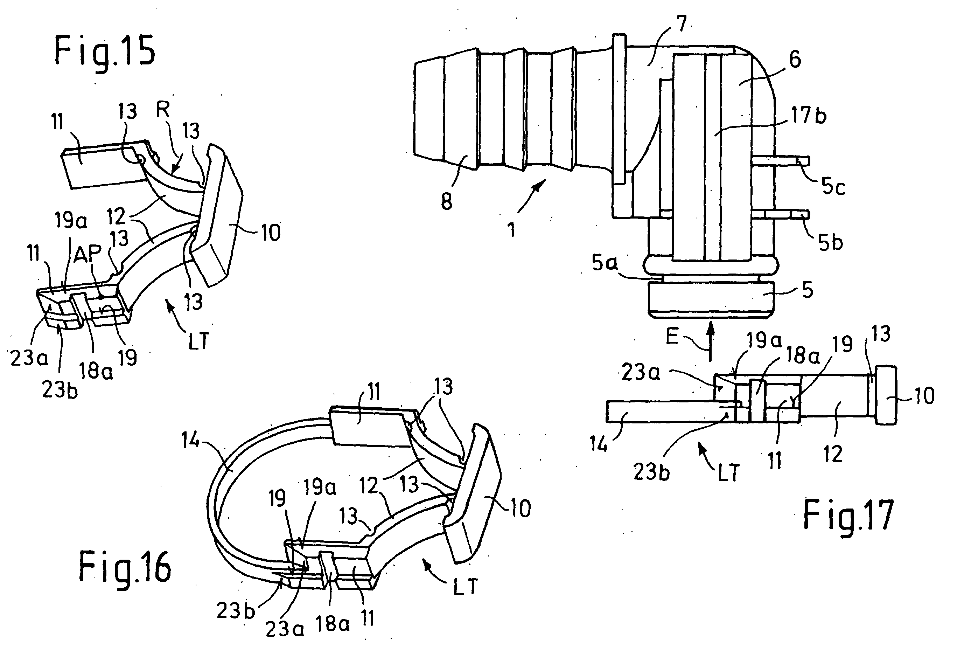

Fig. 8 zeigt eine Ausführung des Löseteils LT, bei der dieses einen Betätigungsabschnitt 10, zwei, jeweils zwischen dem Betätigungsabschnitt 10 und einem Druckübertragungsabschnitt 12 angeordnete Öffnungsabschnitte 11 und einen die Öffnungsabschnitte 11 miteinander verbindenden Verbindungsabschnitt 14 umfaßt. Weitere derartige Ausführungen sind auch in Fig. 10 und 13 sowie in Fig. 16 bis 19 dargestellt. Der Verbindungsabschnitt 14 "ersetzt" einen Betätigungsabschnitt 10, so daß das Löseteil LT in den genannten Ausführungen nur noch einen Betätigungsabschnitt 10 aufweist. Es wurde dazu bereits erwähnt, daß ein Löseteil LT mit einem Betätigungsabschnitt 10 zweckmäßigerweise dann eingesetzt werden kann, wenn der Bauraum oder die Form des ersten Kupplungsteils 1 dies erforderlich machen sollten.

Eine Besonderheit in den Ausführungen gemäß Fig. 9 bis 11 sowie 13 und 14 besteht darin, daß bei den dargestellten möglichen erfindungsgemäßen Varianten die Öffnungsabschnitte 11 des Löseteils LT jeweils Versteifungselemente 15, 16 aufweisen. Bei diesen Versteifungselementen 15, 16 handelt es sich einerseits um rechtwinklig abstehende Rippen 15, die neben ihrer Versteifungsfunktion auch ein Führungsfunktion übernehmen können (Fig. 9, 10), und andererseits um die Haltearme 6 im Montage- oder Vormontagezustand (Fig. 14) umgreifende Ringansätze 16 (Fig. 11, 13). Letztere schützen die Haltearme 6 und bewirken bei einer Druckbeaufschlagung des ersten Kupplungsteiles 1 im gesteckten Zustand eine zusätzliche Versteifung der derselben.

Fig. 12 und 14 sowie 17 bis 19 zeigen Ausführungen des ersten Kupplungsteiles 1, bei denen im Gegensatz zu Fig. 1 sowie 3 bis 6 der Leitungsanschluß 8 und der Stutzenabschnitt 5 im Winkel zueinander, insbesondere in einem rechten Winkel zueinander, angeordnet sind. Hieran wird deutlich, daß die Anwendung des erfindungsgemäß vorgesehenen Löseteiles LT nicht auf eine bestimmte Auslegung des ersten Kupplungteiles 1 beschränkt ist, sondem bei den verschiedensten Bauformen, insbesondere mit einer Ausbildung des Halteabsehnittes 6 als Haltearme 6, eingesetzt werden kann. So kann das erfindungsgemäß vorgesehene Löseteil LT auch mit eine Steckkupplungs-Anordnung kombiniert werden, bei der sich der Halteabschnitt 6 am zweiten Kupplungsteil 2 und das Rastmittel, wie der Flanschabschnitt 4, am ersten Kupplungsteil 1 befindet.

Für gekrümmte Ausführungen des ersten Kupplungsteiles erweist sich der Einsatz eines Löseteiles LT mit nur einem Betätigungsabschnitt 10 als besonders zweckmäßig. Dabei ist es auch möglich, daß das Löseteil LT in seiner Grundgestalt abweichend von einer geschlossenen Ringform im wesentlichen gabelförmig ausgebildet ist, wie dies Fig. 15 zeigt. Durch das Nichtvorhandensein eines zweiten Betätigungsabschnittes 10 ebenso wie eines Verbindungsabschnittes 14 wird die Steife des Löseteiles LT herabgesetzt und die notwendige Betätigungskraft wird reduziert.

Ein bisher nicht erwähntes, jedoch wichtiges, weil vorteilhaftes Merkmal der erfindungsgemäßen Steckkupplung, welches auch in allen figürlich dargestellten Ausführungsformen der Erfindung gezeigt ist, besteht darin, daß einerseits an dem Löseteil LT, insbesondere an dessen Öffnungsabschnitten 11, und andererseits an dem Halteabschnitt 6 des ersten Kupplungsteiles 1, insbesondere den Haltearmen 6, formschlüssig einander zugeordnete Führungselemente 17a, 18a, 17b, 18b, insbesondere Führungsstege 17a, 17b am ersten Kupplungsteil 1 (siehe Fig. 4, 6, 14 und 16) und Führungsnuten 18a, 18b am Löseteil LT (siehe Fig. 2, 4, 6, 7 bis 11, 13 bis 17) angeordnet sind.

Die Führungsnuten 18a können sich dabei vor allem in der radial auswärts gerichteten Fläche der Öffnungsabschnitte 11 befinden, die an den Haltearmen 6 zur Anlage kommt, wobei sich dann die entsprechenden Führungsstege 17a an der komplementären radial nach innen weisenden Anlagefläche der Haltearme 6 befinden.

Für den Fall, daß - wie vorstehend beschrieben - die Öffnungsabschnitte 11 Versteifungselemente in Form von die Haltearme 6 umgreifenden Ringansätzen 16, aufweisen, ist es auch möglich, daß sich jeweils Führungsnuten 18b in der radial einwärts gerichteten Fläche der Ringansätze 16 befinden, die an den Haltearmen 6 zur Anlage kommt, wobei sich dann wiederum die entsprechenden Führungsstege 17b an der komplementären radial nach außen weisenden Anlagefläche der Haltearme 6 befinden.

Die parallel zur Steckachse X-X angeordneten Führungselemente 17a, 17b, 18a, 18b bewirken vorteilhafterweise, daß sich die Öffnungsabschnitte 11 bei einer Betätigung der Betätigungsabschnitte 10 (Pfeil P) nur radial nach außen (Pfeil S) bewegen können und nicht tangential verschoben werden. Damit sind die Führungselemente 17a, 17b, 18a, 18b auch solchermaßen ausgebildet, daß sie eine gegenseitige Verdrehung von Löseteil LT und erstem Kupplungsteil 1 unterbinden, eine relative parallel zur Steckachse X-X verlaufende Verschiebung zueinander jedoch zulassen.

Des weiteren zeigen alle figürlich dargestellten Ausführungen der Erfindung ein Detail, wie das separate Löseteil LT am ersten Kupplungsteil 1 bereits im Vormontagezustand (Fig. 3, 14, 19) gehalten werden kann. Dieses Detail besteht darin, daß einerseits an dem Löseteil LT, insbesondere an dessen Öffnungsabschnitten 11 radial außenseitig, und andererseits an dem Halteabschnitt 6, insbesondere an den Haltearmen 6, des ersten Kupplungsteiles 1 radial innenseitig komplementär einander zugeordnete Anschläge 19, 20, insbesondere einander im Montage- bzw. Vormontagezustand einander gegenüberliegende Anlagekanten 19 des Löseteiles LT (Fig. 2, 4, 7 bis 11, 13 sowie 15 bis 17) und Anlagekanten 20 des ersten Kupplungsteiles 1 (Fig. 1, 4 und 12), angeordnet sind. Diese Kanten 19, 20 verhindern, daß das Löseteil LT (in der Richtung E) zu weit in das erste Kupplungsteil 1 eingeschoben werden kann (Bewegungsbegrenzung). Um aber das Einschieben des Löseteils LT in Einschubrichtung E bis in die gewünschte Position zu erleichtem, kann dabei mit Vorteil der jeweiligen Anlagekante 19 des Löseteils LT jeweils eine Schrägfläche 19a als Anlauffläche vorgeordnet sein, wie dies den genannten Darstellungen der Löseteile LT ebenfalls zu entnehmen ist.

Des weiteren zeigt Fig. 4 (rechte Seite) eine vorteilhafte Möglichkeit, um das separate Löseteil LT am ersten Kupplungsteil 1 bereits im Vormontagezustand unverlierbar zu halten. Diese besteht darin, daß einerseits an dem Löseteil LT, insbesondere an dessen Öffnungsabschnitten 11 radial innenseitig, und andererseits an dem Halteabschnitt 6, insbesondere an den Haltearmen 6 radial außenseitig, des ersten Kupplungsteiles 1 komplementär einander zugeordnete Rastelemente 21, 22, insbesondere einander im Montage- bzw. Vormontagezustand hintergreifende Rastkanten 21 des Löseteiles LT (siehe auch Fig. 13) und Rastkanten 22 des ersten Kupplungsteiles 1 (siehe auch Fig. 12), angeordnet sind.

Die Rastkante 22 des ersten Kupplungsteiles 1 kann dabei mit Vorteil durch die mit ihrer Oberfläche in Steckrichtung E zeigende Stirnfläche des am Stutzenabschnitt 5 umfangsgemäß angeordneten Anschlag 5b zur Begrenzung der Einstecktiefe des ersten Kupplungsteils 1 in das zweite Kupplungsteil 2 gebildet sein. Diese Rastelemente 21, 22 unterbinden nach ihrem Wirksamwerden eine achsparallele Rückverschiebung (entgegen der Richtung E) des Löseteils LT gegenüber dem erstem Kupplungsteil 1. Ähnlich wie bei den Rastelementen 3 des ersten Kupplungsteils 1 zur Verrastung mit dem zweiten Kupplungsteil 2 kann einer Rastkante 21 des Löseteils LT dabei mit Vorteil jeweils eine Schrägfläche 21 a als Anlauffläche vorgeordnet sein, wie dies den genannten Darstellungen der Löseteile LT Fig. 4 und 13 ebenfalls zu entnehmen ist.

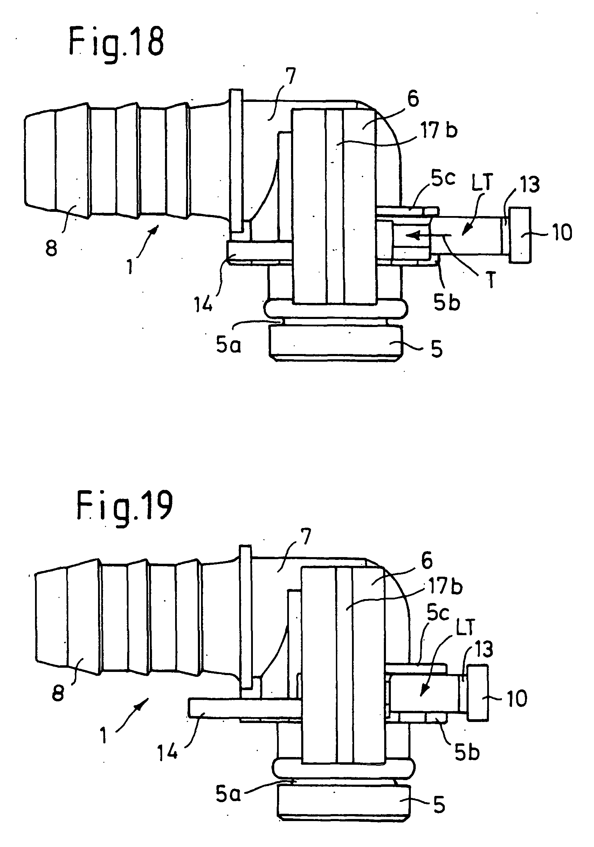

Schließlich kann es bei der erfindungsgemäßen Steckkupplung vorgesehen sein, daß - und dies veranschaulichen Fig. 17 bis 19 - das Löseteil LT und das erste Kupplungsteil 1 mehrfach miteinander verrastet bzw. in mehrfache Richtung gegen eine Relativbewegung zueinander gesichert werden. Dies kann zunächst in einem ersten Vormontageschritt aus der in Fig. 17 dargestellten Position heraus durch ein axiales Einschieben des Löseteiles LT in das erste Kupplungsteil 1 im Sinne des Pfeiles E in Fig. 17, der wiederum auch die Steckrichtung des zweiten Kupplungsteiles anzeigt, sowie gegebenenfalls nachfolgend durch ein Verrasten zur Sicherung gegen eine axiale Rückbewegung des Löseteiles LT geschehen. Das Löseteil LT nimmt dann die in Fig. 18 dargestellte Position an. An den ersten Schritt schließt sich ein zweiter Vormontageschritt an, der in einem tangentialen Verschieben des Löseteiles LT im ersten Kupplungsteil 1 (Pfeil T in Fig. 18) besteht und eine Verrastung bewirkt, die das Löseteil LT gegen eine entgegengerichtete (Rück)bewegung sichert. Diesen Zustand zeigt Fig. 19. Für die tangentiale Verschiebung T des Löseteiles LT können am ersten Kupplungsteil 1 Führungen (Anschlag 5b, Führungsanschlag 5c in Fig. 17 bis 19) vorgesehen sein.

Als Löseteile LT für diese Vormontageart eignen sich insbesondere die in Fig. 15 und 16 dargestellten Ausführungen. Zum axialen Rasten sind dabei komplementär einander zugeordnete Rastelemente an den beiden Kupplungsteilen 1, 2 geeignet, die nach der Art der vorbeschriebenen senkrecht zur Steckachse X-X verlaufenden Rastkanten 21, 22 ausgebildet sind. Zum tangentialen Rasten können mit Vorteil parallel zur Steckachse X-X angeordnete Rastelemente, insbesondere nach der Art der vorbeschriebenen Führungselemente 17a, 18a, zum Einsatz kommen, wobei wiederum insbesondere den Rastelementen des Löseteiles LT entsprechende schräg zur tangentialen Einsteckrichtung T verlaufende Anlaufflächen 23a, 23b vorgeordnet sein können. Das Löseteil LT kann bei fehlendern Verbindungsabschnitt 14 auch nur durch eine tangentiale Verschiebung (Pfeil T in Fig. 18) mit den Kupplungsteilen 1, 2 zusammengesteckt und verrastet werden.

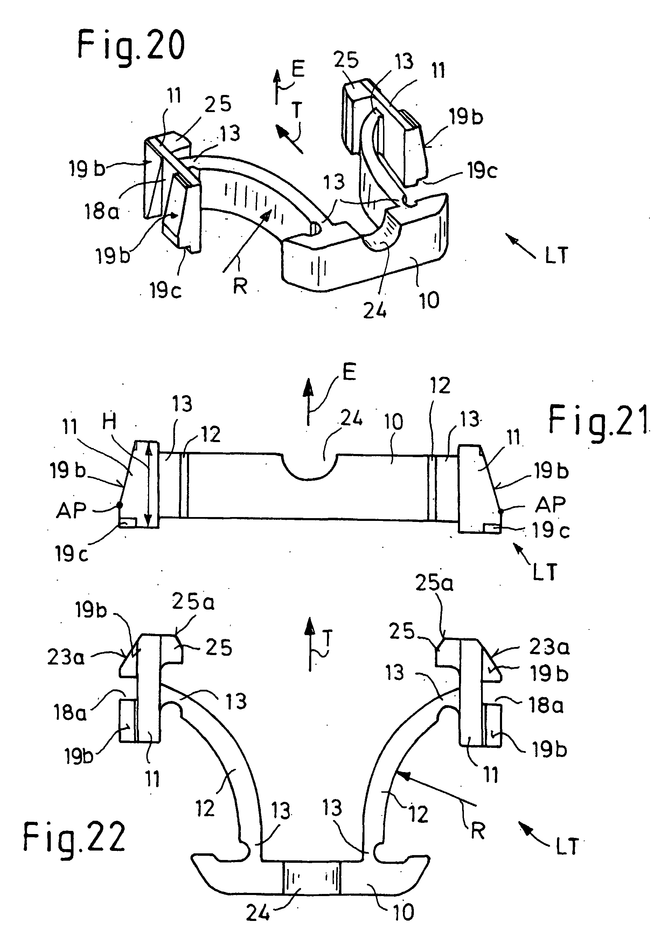

Die in den Fig. 20 bis 22 in perspektivischer Ansicht (Fig. 20), Vorderansicht (Fig. 21) und Draufsicht (Fig. 22) dargestellte weitere Ausführungsform eines Löseteiles LT einer erfindungsgemäßen Steckkupplung entspricht in ihrem Grundaufbau der Ausführung gemäß Fig. 15. Abweichend von dieser genannten Ausführung ist in dem Löseteil LT in seinem Betätigungsabschnitt 10 zusätzlich eine insbesondere im Querschnitt halbkreisförmige zentrisch angeordnete Einkerbung 24 ausgebildet, die als Lageindikator für das Löseteil LT bei einer vollautomatischen Montage dient. Des Weiteren greift der Druckübertragungsabschnitt 12 - im Gegensatz zu der Ausführung gemäß Fig. 15 - über das Filmscharnier 13 nicht endständig, sondern etwa in der Mitte des Öffnungsabschnitts 11 innenseitig an. Dadurch wird beim Lösen eine gleichmäßigere Kraftverteilung erzielt und ein Krümmungsradius R des nach innen gekrümmten Druckübertragungsabschnitts 12 kann vergleichsweise größer ausgebildet werden, woraus sich beim Lösen vorteilhafterweise ein größerer Hebelarm und eine größere mögliche Aufweitung ergeben. Das Löseteil LT weist an der Innenseite seines Öffnungsabschnittes 11 einen Führungsvorsprung 25 mit einer Einlaufschräge 25a (Fig. 22) auf, der bei der radialen bzw. axialen Montage mit dem Stutzenabschnitt 5 des ersten Kupplungsteiles 1 zusammenwirkt und einer Selbstzentrierung des Löseteiles LT im ersten Kupplungsteil 1 - im vorliegenden Fall, dem Stecker - dient.

Vor der radial außenliegenden Führungsnut 18a des jeweiligen Öffnungsabschnittes 11 des Löseteiles LT befindet sich - analog zur Ausführung gemäß Fig. 15 - jeweils eine Schrägfläche 23a, wie dies die Draufsicht des Löseteiles LT in Fig. 22 zeigt. Diese beidseitig und symmetrisch zueinander ausgebildeten Schrägflächen 23a konvergieren in der tangentialen Einsteckrichtung T des Löseteiles LT und dienen - wie bereits erläutert - als Anlaufflächen. Außerdem weist jeweils der Öffnungsabschnitt 11 des Löseteils LT in der dargestellten Ausführung - und dies veranschaulicht insbesondere die Vorderansicht gemäß Fig. 21 - eine weitere Schrägfläche 19b auf. Diese entspricht in ihrer Funktion und in ihrer in der Steckrichtung E des zweiten Kupplungsteiles 2 konvergierenden Verlaufsrichtung der Schrägfläche 19a in der Ausführung gemäß Fig. 15. Im Gegensatz zu der Schrägfläche 19a der Ausführung gemäß Fig. 15 erstreckt sich die Schrägfläche 19b - abgesehen von der auch bei der in Fig. 15 vorhandenen Unterbrechung durch die Führungsnut 18a - aber nahezu über fast die gesamte Höhe H der Außenseite des Öffnungsabschnitts 11, wobei sich aber in einem verbleibenden Höhenabschnitt der Außenseite - in einem in der Fig. 21 unterseitig dargestellten Teil des Öffnungsabschnitts 11 - eine Ausnehmung 19c befindet, die die gleiche Funktion erfüllt wie die Anlagekante 19 in Fig. 15.. Im Detail erstreckt sich die Schrägfläche 19b über mehr als 85 % der Höhe H der Außenseite des Öffnungsabschnitts, während ihre Erstreckung in der Ausführung gemäß Fig. 15, wie den entsprechenden geometrischen Größenverhältnissen zu entnehmen ist, nur maximal etwa 25 % bis 30 % ausmacht. Die vergleichsweise längere Schrägfläche 19b bewirkt, daß bei Betätigung des Löseabschnitts 10 in der Einsteckrichtung T eine Kraft von den Öffnungsabschnitten 11 auf die Haltearme (Halteabschnitte 6) wirkt und sich zwischen den beiden Teilen ein Anlagepunkt AP ausbildet, der im Vergleich der Darstellungen Fig. 15/Fig. 21 in Fig. 21 nach unten wandert. Dadurch verlängert sich ein am Haltearm wirksam werdender Hebelarm, wodurch sich eine auf das Löseteil LT zum Lösen aufzubringende Betätigungskraft vorteilhafterweise verringert.

Die Erfindung ist nicht auf die dargestellten Ausführungsbeispiele beschränkt, sondern umfaßt auch alle im Sinne der Erfindung gleichwirkenden Ausführungen, insbesondere die kinematische Umkehr (Vertauschung der Anordnung) hinsichtlich der Ausbildung des Stutzenabschnitts 5 am einen Kupplungsteil und der zugehörigen Einstecköffnung am anderen Kupplungsteil, d.h. mit anderen Worten, daß das Kupplungsteil mit Stutzenabschnitt 5 oder das Kupplungsteil mit Einstecköffnung für den Stutzenabschnitt 5 den Halteabschnitt 6 aufweisen können, wobei dann die entsprechenden Rastmittel 3, 4 in angepaßter Weise zu gestalten sind.

Außerdem wurde bereits erwähnt, daß das erste Kupplungsteil 1 und das Löseteil LT in unterschiedlichen Formen ausgeführt werden können. Ein Kupplungsteil kann oder beide Kupplungsteile 1, 2 können einseitig auch direkt an Geräte angeschlossen oder anschließbar sein, ohne daß der Rahmen der Erfindung verlassen wird.

### Bezugszeichen

- 1: erstes Kupplungsteil
- 2: zweites Kupplungsteil
- 3: Rastmittel von 1
- 3a: Rastkante von 1
- 3b: Anlauffläche vor 3a
- 4: Rastmittel von 2, Flanschabschnitt
- 5: Stutzenabschnitt von 1
- 5a: Umfangsnut in 5
- 5b: Anschlag von 5
- 5c: Führungsanschlag von 5
- 6: Halteabschnitt von 1, Haltearm
- 7: Rohrstück von 1 zwischen 5 und 8
- 8: Leitungsanschluß von 1
- 9: Leitungsanschluß von 2
- 10: Betätigungsabschnitt von LT
- 11: Öffnungsabschnitt von LT
- 12: Druckübertragungsabschnitt von LT
- 13: (Film-)Schamiervon LT
- 14: Verbindungsabschnitt von LT
- 15: Versteifungselement an 11, Rippe
- 16: Versteifungselement an 11, Ringansatz
- 17a: Führungssteg an 6, radial innenliegend
- 17b: Führungssteg an 6, radial außenliegend
- 18a: Führungsnut in 11, radial außenliegend
- 18b: Führungsnut in 16, radial innenliegend
- 19: Anlagekante von 11 für 20
- 19a: Schrägfläche von 11 vor 19
- 19b: Schrägfläche von 11 vor 19c (Fig. 21)
- 19c: Ausnehmung in 11
- 20: Anlagekante von 6 für 19
- 21: Rastelement von LT, Rastkante an 11 für 22
- 21 a: Schrägfläche vor 21
- 22: Rastelement von 1; Rastkante an 5 für 21
- 23a, 23b: Anlauflächen vor 18a
- 24: Einkerbung in 10
- 25: Führungsvorsprung an 11
- 25a: Einlaufschräge von 25

- AP: Anlagepunkt 11/6
- E: Steckrichtung von 2, (erste) Montagerichtung von LT
- H: Seitenhöhe von 11
- LT: Löseteil
- P: Betätigungsrichtung von 10
- R: Krümmungsradius von 12
- S: Spreizrichtung von 6, 11
- T: tangentiale Richtung, (zweite) Montagerichtung von LT
- X-X: Steckachse von 1, 2

## Patentansprüche

1. Steckkupplung für fluidische Systeme, mit zwei miteinander verbindbaren Kupplungsteilen (1, 2), die jeweils zur gegenseitigen Verbindung einander zugeordnete Rastmittel (3, 4) aufweisen, wobei eines der Kupplungsteile (1, 2) einen endseitigen Stutzenabschnitt (5) aufweist, mit dem es in das andere Kupplungsteil (2, 1) einsteckbar ist, und wobei eines der Kupplungsteile (1, 2) mindestens einen endseitigen, seine Rastmittel (3) tragenden Haltearm (6) aufweist, mit dem es eine äußere Umfangskontur des anderen Kupplungsteiles (2, 1), an der die zugeordneten komplementären Rastmittel (4) ausgebildet sind, übergreift, wobei zur Trennung der Rastverbindung zwischen den Rastmitteln (3) des ersten Kupplungsteils (1) und den Rastmitteln (4) des zweiten Kupplungsteils (2) im Montagezustand am ersten Kupplungsteil (1) und/oder am zweiten Kupplungsteil (2) ein separates Löseteil (LT) gehalten ist,
**dadurch gekennzeichnet, dass** das Löseteil (LT) mindestens einen Betätigungsabschnitt (10) und mindestens zwei Öffnungsabschnitte (11) zur jeweiligen Anlage an einer radial nach innen gerichteten Fläche der Haltearme (6) aufweist, wobei der Betätigungsabschnitt (10) und die Öffnungsabschnitte (11) derart ausgeführt sind, dass durch einen radialen Druck auf den Betätigungsabschnitt (10) sowohl die Öffnungsabschnitte (11) als auch über die Öffnungsabschnitte (11) die Haltearme (6) radial aufgespreizt werden.

2. Steckkupplung nach Anspruch 1,
**dadurch gekennzeichnet, daß** der Rastmittel (3) tragende Halteabschnitt bzw. Haltearm (6) aus zwei einander diametral gegenüberliegenden elastisch rückfedernd aufspreizbaren Haltearmen (6) gebildet ist.

3. Steckkupplung nach Anspruch 2,
**dadurch gekennzeichnet, daß** die Haltearme (6) einstückig an ein Rohrstück (7) des ersten Kupplungsteiles (1) angeformt sind, an dem einendig ein Leitungsanschluß (8) und anderendig der Stutzenabschnitt (5) ausgebildet sind.

4. Steckkupplung nach Anspruch 3,
**dadurch gekennzeichnet, daß** der Leitungsanschluß (8) und der Stutzenabschnitt (5) koaxial, d.h. miteinander fluchtend, angeordnet sind.

5. Steckkupplung nach Anspruch 3,
**dadurch gekennzeichnet, daß** der Leitungsanschluß (8) und der Stutzenabschnitt (5) im Winkel zueinander, insbesondere in einem rechten Winkel zueinander, angeordnet sind.

6. Steckkupplung nach einem der Ansprüche 1 bis 5,
**dadurch gekennzeichnet, daß** die Rastmittel (3) des ersten Kupplungsteiles (1) jeweils durch eine Rastkante (3a) gebildet sind, der eine Anlauffläche (3b) vorgeordnet ist, und daß die komplementären Rastmittel (4) des zweiten Kupplungsteiles (2) aus einem, insbesondere endständig angeordneten, ringförmig umlaufenden Flanschabschnitt (4) gebildet sind.

7. Steckkupplung nach einem der Ansprüche 1 bis 6,
**dadurch gekennzeichnet, daß** das zweite Kupplungsteil (2) einendig, insbesondere auf der dem Flanschabschnitt (4) abgewandten Seite, einen Leitungsanschluß (9) aufweist.

8. Steckkupplung nach einem der Ansprüche 1 bis 7,
**dadurch gekennzeichnet, daß** der Stutzenabschnitt (5) eine Umfangsnut (5a) zur Aufnahme einer Dichtung, wie eines O-Ringes, aufweist.

9. Steckkupplung nach einem der Ansprüche 1 bis 8,
**dadurch gekennzeichnet, daß** der Stutzenabschnitt (5) einen umfangsgemäß angeordneten, insbesondere mit dem Flanschabschnitt (4) des zweiten Kupplungsteiles (2) zusammenwirkenden Anschlag (5b) zur Begrenzung seiner Einstecktiefe in das zweite Kupplungsteil (2) aufweist.

10. Steckkupplung nach einem der Ansprüche 1 bis 9,
**dadurch gekennzeichnet, daß** das Löseteil (LT) zwei einander gegenüberliegende, plattenartige, Betätigungsabschnitte (10) aufweist.

11. Steckkupplung nach einem der Ansprüche 1 bis 10,
**dadurch gekennzeichnet, daß** das Löseteil (LT) zwei einander gegenüberliegende, insbesondere plattenartige, Öffnungsabschnitte (11) zur Anlage an der radial nach innen gerichteten Fläche der Haltearme (6) und zum radialen Aufspreizen der Haltearme (6) aufweist.

12. Steckkupplung nach einem der Ansprüche 1 bis 11,
**dadurch gekennzeichnet, daß** die Öffnungsabschnitte (11) Versteifungselemente (15, 16), wie rechtwinklig abstehende Rippen (15) oder die Haltearme (6) umgreifende Ringansätze (16), aufweisen.

13. Steckkupplung nach einem der Ansprüche 1 bis 12,
**dadurch gekennzeichnet, daß** das Löseteil (LT) mindestens zwei Druckübertragungsabschnitte (12), vorzugsweise vier, insbesondere stabartig ausgebildete, Druckübertragungsabschnitte (12) aufweist.

14. Steckkupplung nach Anspruch 13,
**dadurch gekennzeichnet, daß** die Druckübertragungsabschnitte (12) mittig oder außen an den/dem Betätigungsabschnitt(en) (10) oder den Öffnungsabschnitten (11) ansetzen.

15. Steckkupplung nach Anspruch 13 oder 14,
**dadurch gekennzeichnet, daß** die Druckübertragungsabschnitte (12) eine konkave Krümmung aufweisen.

16. Steckkupplung nach einem der Ansprüche 1 bis 10 und Anspruch 11 oder 12 und einem der Ansprüche 13 bis 15,
**dadurch gekennzeichnet, daß** jeweils ein Druckübertragungsabschnitt (12) einen/den Betätigungsabschnitt (10) mit einem Öffnungsabschnitt (11) verbindet.

17. Steckkupplung nach einem der Ansprüche 1 bis 16,
**dadurch gekennzeichnet, daß** das Löseteil (LT), gegebenenfalls auch abschnittsweise, eine runde, ovale oder vieleckige Form aufweist.

18. Steckkupplung nach einem der Ansprüche 1 bis 17,
**dadurch gekennzeichnet, daß** das Löseteil (LT) in seiner Grundgestalt im wesentlichen als Ring ausgebildet ist.

19. Steckkupplung nach Anspruch 18,
**dadurch gekennzeichnet, daß** das Löseteil (LT) einen Betätigungsabschnitt (10), zwei, jeweils zwischen dem Betätigungsabschnitt (10) und einem Druckübertragungsabschnitt (12) angeordnete Öffnungsabschnitte (11) und einen die Öffnungsabschnitte (11) miteinander verbindenden Verbindungsabschnitt (14) umfaßt.

20. Steckkupplung nach einem der Ansprüche 1 bis 17,
**dadurch gekennzeichnet, daß** das Löseteil (LT) in seiner Grundgestalt im wesentlichen gabelförmig ausgebildet ist.

21. Steckkupplung nach einem der Ansprüche 1 bis 20,
**dadurch gekennzeichnet, daß** das Löseteil (LT), zumindest abschnittsweise, aus einem elastisch federnden Material besteht.

22. Steckkupplung nach einem der Ansprüche 1 bis 21,
**dadurch gekennzeichnet, daß** das Löseteil (LT), zumindest abschnittsweise, aus einem starren Material besteht.

23. Steckkupplung nach einem der Ansprüche 1 bis 22,
**dadurch gekennzeichnet, daß** in dem Löseteil (LT) verschiedene Abschnitte, beispielsweise starre und/oder elastische Abschnitte, wie Druckübertragungsabschnitte (12), Betätigungsabschnitt(e) (10) oder Öffnungsabschnitte (11), über Scharniere (13), wie Filmscharniere (13), miteinander verbunden sind.

24. Steckkupplung nach einem der Ansprüche 1 bis 23,
**dadurch gekennzeichnet, daß** an dem Löseteil (LT), insbesondere an dessen Öffnungsabschnitten (11), und dem Halteabschnitt (6), insbesondere den Haltearmen (6), des ersten Kupplungsteiles (1) formschlüssig einander zugeordnete Führungselemente (17a, 18a, 17b, 18b), insbesondere Führungsstege (17a, 17b) und Führungsnuten (18a, 18b), angeordnet sind.

25. Steckkupplung nach Anspruch 24,
**dadurch gekennzeichnet, daß** die Führungselemente (17a, 18a, 17b, 18b) derart ausgebildet sind, daß sie eine gegenseitige Verdrehung von Löseteil (LT) und erstem Kupplungsteil (1) unterbinden, eine relative achsparallele Verschiebung zueinander jedoch zulassen.

26. Steckkupplung nach einem der Ansprüche 1 bis 25,
**dadurch gekennzeichnet, daß** an dem Löseteil (LT), insbesondere an dessen Öffnungsabschnitten (11), und dem Halteabschnitt (6), insbesondere den Haltearmen (6), des ersten Kupplungsteiles komplementär einander zugeordnete Rastelemente, (21, 22) insbesondere einander im Montagezustand hintergreifende Rastkanten (21, 22), sowie Anlagekanten (19, 20) angeordnet sind, die im Montagezustand eine relative achsparallele Verschiebung von Löseteil (LT) und erstem Kupplungsteil (1) gegeneinander unterbinden oder zumindest begrenzen.

27. Steckkupplung nach einem der Ansprüche 1 bis 26,
**dadurch gekennzeichnet, daß** an dem Löseteil (LT), insbesondere an dessen Öffnungabschnitten (11), und dem Halteabschnitt (6), insbesondere den Haltearmen (6), des ersten Kupplungsteiles (1) komplementär einander zugeordnete Rastelemente (17a, 18a), insbesondere im Montagezustand einander hintergreifende Rastkanten, denen zumindest eine entgegen einer tangential verlaufenden Montagerichtung (T) ansteigende Anlauffläche (23a, 23b) vorgeordnet ist, angeordnet sind, die im Montagezustand eine relative tangentiale Verschiebung von Löseteil (LT) und erstem Kupplungsteil (1) gegeneinander unterbinden.

## Claims

1. A plug-in coupling for fluid systems, with two coupling parts (1, 2) which are capable of being connected to each other and which have in each case catch means (3, 4) associated with each other for mutual connexion, wherein one of the coupling parts (1, 2) has at its end a socket portion (5) by which it is capable of being inserted into the other coupling part (2, 1), and wherein one of the coupling parts (1, 2) has at its end at least one holding arm (6) which carries its catch means (3) and by which it engages over an external peripheral contour of the other coupling part (2, 1) on which the associated complementary catch means (4) are formed, wherein a separate release part (LT) is held on the first coupling part (1) and/or on the second coupling part (2) in order to separate the catch connexion between the catch means (3) of the first coupling part (1) and the catch means (4) of the second coupling part (2) in the assembled state, **characterized in that** the release part (LT) comprises at least one actuating portion (10) and at least two opening portions (11) for resting in each case against a face of the holding arms (6) directed radially inwards, wherein the actuating portion (10) and the opening portions (11) are designed in such a way that both the opening portions (11) and, by way of the opening portions (11), the holding arms (6) are spread apart radially by a radial pressure upon the actuating portion (10).

2. A plug-in coupling according to Claim 1, **characterized in that** the holding portion or holding arm (6) carrying the catch means (3) is formed from two holding arms (6) which are diametrically opposite each other and which are capable of being spread apart in a resilient manner.

3. A plug-in coupling according to Claim 2, **characterized in that** the holding arms (6) are formed integrally in one piece on a pipe member (7) of the first coupling part (1) on which a line attachment (8) is formed at one end and the socket portion (5) is formed at the other end.

4. A plug-in coupling according to Claim 3, **characterized in that** the line attachment (8) and the socket portion (5) are arranged coaxially, i.e. in alignment with each other.

5. A plug-in coupling according to Claim 3, **characterized in that** the line attachment (8) and the socket portion (5) are arranged at an angle to each other, in particular at a right angle to each other.

6. A plug-in coupling according to one of Claims 1 to 5, **characterized in that** the catch means (3) of the first coupling part (1) are formed in each case by a catching edge (3a) in front of which is a run-up face (3b), and the complementary catch means (4) of the second coupling part (2) are formed by a flange portion (4) which, in particular, is arranged at the end and which extends in an annular manner.

7. A plug-in coupling according to one of Claims 1 to 6, **characterized in that** the second coupling part (2) has a line attachment (9) at one end, in particular on the side facing away from the flange portion (4).

8. A plug-in coupling according to one of Claims 1 to 7, **characterized in that** the socket portion (5) has a peripheral groove (5a) for receiving a seal, such as an O-ring.

9. A plug-in coupling according to one of Claims 1 to 8, **characterized in that** the socket portion (5) has a stop (5b) which is arranged on the periphery and which, in particular, co-operates with the flange portion (4) of the second coupling part (2) in order to limit the depth of its insertion into the second coupling part (2).

10. A plug-in coupling according to one of Claims 1 to 9, **characterized in that** the release part (LT) has two mutually opposite, plate-like actuating portions (10).

11. A plug-in coupling according to one of Claims 1 to 10, **characterized in that** the release part (LT) has two mutually opposite, in particular plate-like, opening portions (11) for resting against the face of the holding arms (6) directed radially inwards and for spreading the holding arms (6) apart radially.

12. A plug-in coupling according to one of Claims 1 to 11, **characterized in that** the opening portions (11) have reinforcement elements (15, 16), such as ribs (15) projecting at right angles or annular attachments (16) engaging around the holding arms (6).

13. A plug-in coupling according to one of Claims 1 to 12, **characterized in that** the release part (LT) has at least two pressure-transmission portions (12), preferably four pressure-transmission portions (12), in particular constructed in the form of rods.

14. A plug-in coupling according to Claim 13, **characterized in that** the pressure-transmission portions (12) adjoin the actuating portion or portions (10) or the opening portions (11) in the middle or on the outside.

15. A plug-in coupling according to Claim 13 or 14, **characterized in that** the pressure-transmission portions (12) have a concave curvature.

16. A plug-in coupling according to one of Claims 1 to 10 and Claim 11 or 12 and one of Claims 13 to 15, **characterized in that** one respective pressure-transmission portion (12) connects a / the actuating portion (10) to an opening portion (11) in each case.

17. A plug-in coupling according to one of Claims 1 to 16, **characterized in that** the release part (LT) has a round, oval or square shape, optionally also locally.

18. A plug-in coupling according to one of Claims 1 to 17, **characterized in that** the release part (LT) is constructed substantially in the form of a ring in its basic shape.

19. A plug-in coupling according to Claim 18, **characterized in that** the release part (LT) comprises an actuating portion (10), two opening portions (11) arranged between the actuating portion (10) and a pressure-transmission portion (12) in each case, and a connecting portion (14) connecting the opening portions (11) to each other.

20. A plug-in coupling according to one of Claims 1 to 17, **characterized in that** the release part (LT) is constructed substantially in the form of a fork in its basic shape.

21. A plug-in coupling according to one of Claims 1 to 20, **characterized in that** the release part (LT) consists, at least locally, of a resiliently yielding material.

22. A plug-in coupling according to one of Claims 1 to 21, **characterized in that** the release part (LT) consists, at least locally, of a rigid material.

23. A plug-in coupling according to one of Claims 1 to 22, **characterized in that**, in the release part (LT), different portions, for example rigid and/or resilient portions, such as the pressure-transmission portions (12), the actuating portion or portions (10) or the opening portions (11), are connected to one another by way of hinges (13), such as film hinges (13).

24. A plug-in coupling according to one of Claims 1 to 23, **characterized in that** guiding elements (17a, 18a, 17b, 18b), in particular guiding webs (17a, 17b) and guiding grooves (18a, 18b), associated with one another in a positively locking manner are arranged on the release part (LT), in particular on its opening portions (11), and the holding portion (6), in particular the holding arms (6), of the first coupling part (1).

25. A plug-in coupling according to Claim 24, **characterized in that** the guiding elements (17a, 18a, 17b, 18b) are designed in such a way that they prevent a mutual rotation of the release part (LT) and the first coupling part (1), but permit a relative axially parallel displacement with respect to each other.

26. A plug-in coupling according to one of Claims 1 to 25, **characterized in that** catch elements (21, 22), in particular catch edges (21, 22) engaging one behind the other in the assembled state, and abutment edges (19, 20), which are associated with one another in a complementary manner and which prevent or at least limit a relative axially parallel displacement of the release part (LT) and the first coupling part (1) with respect to each other in the assembled state, are arranged on the release part (LT), in particular on its opening portions (11), and the holding portion (6), in particular the holding arms (6), of the first coupling part.

27. A plug-in coupling according to one of Claims 1 to 26, **characterized in that** catch elements (17a, 18a), in particular catch edges engaging one behind the other in the assembled state, which are associated with one another in a complementary manner and in front of which at least one run-up face (23a, 23b) ascending in a direction opposed to a tangentially extending assembly direction (T) is positioned and which prevent a relative tangential displacement of the release part (LT) and the first coupling part (1) with respect to each other in the assembled state, are arranged on the release part (LT), in particular on its opening portions (11), and the holding portion (6), in particular the holding arms (6), of the first coupling part (1).

## Revendications

1. Accouplement à fiche pour des systèmes fluidiques, contenant deux parties d'accouplement (1, 2) pouvant être reliées entre elles, qui présentent chacune des moyens d'encliquetage (3, 4) attribués l'un à l'autre pour la liaison réciproque, l'une des parties d'accouplement (1, 2) présentant une section de tubulure (5) côté extrémité, avec laquelle il peut être emboîté dans l'autre partie d'accouplement (2, 1), et l'une des parties d'accouplement (1, 2) présentant un bras de support (6) côté extrémité et portant ses moyens d'encliquetage (3), avec lequel il recouvre un contour périphérique extérieur de l'autre partie d'accouplement (2, 1), sur lequel les moyens d'encliquetage (4) complémentaires attribués sont formés, une partie de desserrage (LT) séparée étant maintenue sur la première partie d'accouplement (1) et/ou sur la deuxième partie d'accouplement (2) pour la séparation de la liaison par encliquetage entre les moyens d'encliquetage (3) de la première partie d'accouplement (1) et les moyens d'encliquetage (4) de la seconde partie d'accouplement (2) dans l'état de montage,
**caractérisé en ce que** le partie de desserrage (LT) présente au moins une section d'actionnement (10) et au moins deux sections d'ouverture (11) pour l'appui respectif sur une surface, orientée radialement vers l'intérieur, des bras de support (6), la section d'actionnement (10) et les sections d'ouverture (11) étant réalisées de telle sorte que, sous l'effet d'une pression radiale exercée sur la section d'actionnement (10) et les sections d'ouverture (11) de même que par les sections d'ouverture (11), les bras de support (6) sont écartés radialement.

2. Accouplement par fiche selon la revendication 1,
**caractérisé en ce que** la section de support ou le bras de support (6) portant des moyens d'encliquetage (3) est constitué de deux bras de support (6) pouvant être écartés avec un retour élastique et diamétralement opposés.

3. Accouplement par fiche selon la revendication 2,
**caractérisé en ce que** les bras de support (6) sont formés d'une seule pièce sur un bout de tuyau (7) de la première partie d'accouplement (1), sur laquelle sont réalisés sur une extrémité un branchement de conduite (8) et sur l'autre extrémité la section de tubulure (5).

4. Accouplement à fiche selon la revendication 3,
**caractérisé en ce que** le branchement de conduite (8) et la section de tubulure (5) sont disposés de façon coaxiale, c'est-à-dire alignés l'un par rapport à l'autre.

5. Accouplement à fiche selon la revendication 3,
**caractérisé en ce que** le branchement de conduite (8) et la section de tubulure (5) sont disposés en formant un angle l'un par rapport à l'autre, en particulier en formant un angle droit.

6. Accouplement à fiche selon l'une quelconque des revendications 1 à 5,
**caractérisé en ce que** les moyens d'encliquetage (3) de la première partie d'accouplement (1) sont formés chacun par un bord d'encliquetage (3 a), qui est précédé d'une surface d'arrêt (3b), et **en ce que** les moyens d'encliquetage (4) complémentaires de la deuxième partie d'accouplement (2) sont constitués d'une section de bride (4) disposée en particulier côté extrémité et tournant en forme d'anneau.

7. Accouplement à fiche selon l'une quelconque des revendications 1 à 6,
**caractérisé en ce que** la seconde partie d'accouplement (2) présente un branchement de conduite (9) sur une extrémité, en particulier sur le côté opposé à la partie de bride (4).

8. Accouplement à fiche selon l'une quelconque des revendications 1 à 7,
**caractérisé en ce que** la section de tubulure (5) présente une rainure périphérique (5a) pour le logement d'un joint, comme un joint torique.

9. Accouplement à fiche selon l'une quelconque des revendications 1 à 8,
**caractérisé en ce que** la section de tubulure (5) présente une butée (5b) disposée selon le pourtour, coopérant en particulier avec la section de bride (4) de la seconde partie d'accouplement (2) pour la délimitation de sa profondeur d'emboîtement dans la seconde partie d'accouplement (2).

10. Accouplement à fiche selon l'une quelconque des revendications 1 à 9,
**caractérisé en ce que** la partie de desserrage (LT) présente deux sections d'actionnement (10) en forme de plaque et se faisant face.

11. Accouplement à fiche selon l'une quelconque des revendications 1 à 10,
**caractérisé en ce que** la partie de desserrage (LT) présente deux sections d'ouverture (11) se faisant face, en particulier en forme de plaque, pour l'appui sur la surface, orientée radialement vers l'intérieur, des bras de support (6) et pour l'écartement radial des bras de support (6).

12. Accouplement à fiche selon l'une quelconque des revendications 1 à 11,
**caractérisé en ce que** les sections d'ouverture (11) présentent des éléments de renfort (15, 16), comme des nervures (15) débordant à angle droit ou des embases de bague (16) entourant les bras de support (6).

13. Accouplement à fiche selon l'une quelconque des revendications 1 à 12,
**caractérisé en ce que** la partie de desserrage (LT) présente au moins deux sections de transmission de pression (12), de préférence quatre sections de transmission de pression (12), réalisées en particulier en forme de barre.

14. Accouplement à fiche selon la revendication 13,
**caractérisé en ce que** les sections de transmission de pression (12) sont disposées au centre ou à l'extérieur sur la/les section(s) d'actionnement (10) ou les sections d'ouverture (11).

15. Accouplement à fiche selon la revendication 13 ou 14,
**caractérisé en ce que** les sections de transmission de pression (12) présentent une courbure concave.

16. Accouplement à fiche selon l'une quelconque des revendications 1 à 10 et selon la revendication 11 ou 12 et l'une quelconque des revendications 13 à 15,
**caractérisé en ce que** à chaque fois une section de transmission de pression (12) relie la/les section(s) d'actionnement (10) à une section d'ouverture (11).

17. Accouplement à fiche selon l'une quelconque des revendications 1 à 16,
**caractérisé en ce que** la partie de desserrage (LT) présente une forme ronde, ovale ou polygonale, éventuellement même par tronçon.

18. Accouplement à fiche selon l'une quelconque des revendications 1 à 17,
**caractérisé en ce que** la partie de desserrage (LT) est conçue dans sa forme de base, sensiblement comme une bague.

19. Accouplement à fiche selon la revendication 18,
**caractérisé en ce que** la partie de desserrage (LT) comprend une section d'actionnement (10), deux sections d'ouverture (11) disposées respectivement entre la section d'actionnement (10) et une section de transmission de pression (12) et une section de liaison (14) reliant entre elles les sections d'ouverture (11).

20. Accouplement à fiche selon l'une quelconque des revendications 1 à 17,
**caractérisé en ce que** la partie de desserrage (LT) est conçue sensiblement en forme de fourche dans sa forme de base.

21. Accouplement à fiche selon l'une quelconque des revendications 1 à 20,
**caractérisé en ce que** la partie de desserrage (LT) est à base, au moins par endroits, d'un matériau élastique comme un ressort.

22. Accouplement à fiche selon l'une quelconque des revendications 1 à 21,
**caractérisé en ce que** la partie de desserrage (LT) est à base d'un matériau rigide, au moins par endroits.

23. Accouplement à fiche selon l'une quelconque des revendications 1 à 22,
**caractérisé en ce que**, dans la partie de desserrage (LT), différentes sections, par exemple des sections rigides et/ou des sections élastiques, comme des sections de transmission de pression (12), des sections d'actionnement (10) ou des sections d'ouverture (11), sont reliées entre elles au moyen de charnières (13), comme des charnières à film (13).

24. Accouplement à fiche selon l'une quelconque des revendications 1 à 23,
**caractérisé en ce que** sur la partie de desserrage (LT), en particulier sur ses sections d'ouverture (11), et la section de support (6), en particulier les bras de support (6), de la première partie d'accouplement (1) sont disposés des éléments de guidage (17a, 18a, 17b, 18b), en particulier des barrettes de guidage (17a, 17b) et des rainures de guidage (18a, 18b), qui sont attribués les uns aux autres par complémentarité de forme.

25. Accouplement par fiche selon la revendication 24,
**caractérisé en ce que** les éléments de guidage (17a, 18a, 17b, 18b) sont réalisés de telle sorte qu'ils interdisent une rotation réciproque de la partie de desserrage (LT) et de la première partie d'accouplement (1), mais autorisent un déplacement relatif parallèle à l'axe les uns par rapport aux autres.

26. Accouplement par fiche selon l'une quelconque des revendications 1 à 25,
**caractérisé en ce que** sur la partie de desserrage (LT), en particulier sur ses sections d'ouverture (11), et la section de support (6), en particulier les bras de support (6), de la première partie d'accouplement sont disposés des éléments d'encliquetage (21, 22) attribués les uns aux autres de façon complémentaire, en particulier des bords d'encliquetage (21, 22) qui se saisissent par l'arrière dans l'état de montage, ainsi que des bords d'appui (19, 20), qui interdisent ou tout de moins limitent dans l'état de montage un déplacement relatif et parallèle à l'axe de la partie de desserrage (LT) et la première partie d'accouplement (1) l'une par rapport à l'autre.

27. Accouplement par fiche selon l'une quelconque des revendications 1 à 26,
**caractérisé en ce que** sur la partie de desserrage (LT), en particulier sur ses sections d'ouverture (11), et la section de support (6), en particulier les bras de support (6), de la première partie d'accouplement (1) sont disposés des éléments d'encliquetage (17a, 18a) attribués réciproquement de façon complémentaire, en particulier des bords d'encliquetage se saisissant par l'arrière dans l'état de montage, en amont desquels est disposée au moins une surface d'arrêt (23a, 23b) grimpant dans le sens contraire à un sens de montage (T) disposé tangentiellement, lesquels bords suppriment dans l'état de montage un déplacement tangentiel relatif de la partie de desserrage (LT) et la première partie d'accouplement (1) l'une par rapport à l'autre.
